# EUROPEAN PATENT APPLICATION

(11) **EP 2 207 114 A1**
(43) Date of publication of application: **14.07.2010**
(21) Application number: 08254174.9
(22) Date of filing: 30.12.2008
(51) Int. Cl.: G06F 17/30

(54) **Multimedia delivery**

(71) Applicant: BRITISH TELECOMMUNICATIONS public limited company, London EC1A 7AJ (GB)
(72) Inventor: The designation of the inventor has not yet been filed
(74) Representative: Geffen, Nigel Paul

(57) **Abstract**

A method for delivering a non-linear narrative from a narrative server to a viewer. The narrative article is formed or a plurality of media layers, each layer containing a different type of media element. A narrative layer defines the non-linear narrative and also contains information of synchronisation points between each of the layers.

## Description

The present invention is concerned with multimedia articles for viewing by end users and in particular, the delivery of the content of such non-linear multimedia articles to and end user.

Multimedia articles are sequences of audio and/or video content, for example a movie clip or a presentation. Such articles are typically linear in that there is a predefined order of displaying the sequences between the beginning of the multimedia article and the end. For example, from a set of audio sequences A, B and C and video sequences I, II, III and IV, a media article may be defined as III + A followed by I followed by IV + C and finally II + B. Once the designer of the media article has defined the sequence, it is fixed and even though a viewer can navigate to points within the article, the order of presentation of the sequences is fixed.

In order to provide with viewer with a more enjoyable viewing experience, the viewer should have some control over the order in which the component media sequences are displayed. To address this issue, it is also known in the art to provide a "non-linear interactive" or "shape-shifted" storyline.

The user is presented with choices during the storyline and the subsequent parts of the story vary in dependence upon the choices made by the user. During a storyline, the user will have many opportunities to make choices, thereby allowing many possible outcomes. In this way the program is tailored to the user's specific interests.

In order to implement a non-linear narrative, a designer must create a framework of media items such as video and audio data and define the decision points/rules to define the order in which media clips are displayed to the user.

In a conventional non-linear storyline, the rules defining decision points are processed as the user makes choices. After a user choice has been received, the media items following the decision are loaded from memory and a media stream is synthesized for display to the user.

However, synthesizing the media streams to the user is a processor intensive task and the time necessary for synthesis is variable. This can lead to delays in the delivery of the media item to the user and hence interrupt the viewing experience.

The present invention aims to address these problems.

In one aspect, the present invention provides a method of delivering a non-linear multimedia article as set out in claim 1.

Preferable features of the invention are as set out in the dependent claims.

The present invention will now be described with reference to the accompanying figures in which:
Figure 1 shows a multimedia article generation and distribution system in accordance with an embodiment of the present invention;
Figure 2 shows a hardware configuration of a non-linear media article authoring computer illustrated in Figure 1;
Figure 3 shows the functional processing components of the authoring system illustrated in Figure 2;
Figure 4 shows a flow chart of the operational steps performed by functional processing components illustrated in Figure 3;
Figure 5 shows a set of rules input by the user and stored in the Rules store illustrated in Figure 3;
Figure 6 shows a simple non-linear narrative data structure generated by the narrative designer illustrated in Figure 3;
Figure 7A shows a first narrative tree generated by the narrative tree generator illustrated in Figure 3;
Figure 7B shows an optimised narrative tree generated after optimisation by the narrative tree generator;
Figure 8 shows a flow chart of the specific processing optimisations performed by the narrative tree generator illustrated in Figure 3;
Figure 9A shows the general structure of a node data structure;
Figure 9B shows the data structure of the nodes of the un-optimised narrative tree;
Figure 9C shows the data structure of the nodes of the optimised narrative tree;
Figure 10A shows the contents of the media elements store illustrated in Figure 3 before optimisation;
Figure 10B shows the contents of the media elements store illustrated in Figure 3 after the optimisation; and
Figure 11 shows the final non-linear media article generated by the authoring computer shown in Figure 2.
Figure 12 shows a non-linear data structure according to a second embodiment having a loop condition;
Figure 13 shows a layered non-linear narrative article.

### First embodiment

An embodiment of the authoring system will now be described.

In the present embodiment, the total set of rules are evaluated and processed to produce a tree of decisions such that atomic sections of the narrative are identified. Following this processing, the media items which would be displayed after a decision are pre-processed and stored in a dictionary and the nodes of the tree are tree is updated with pointers to the corresponding media items stored in the dictionary.

### System

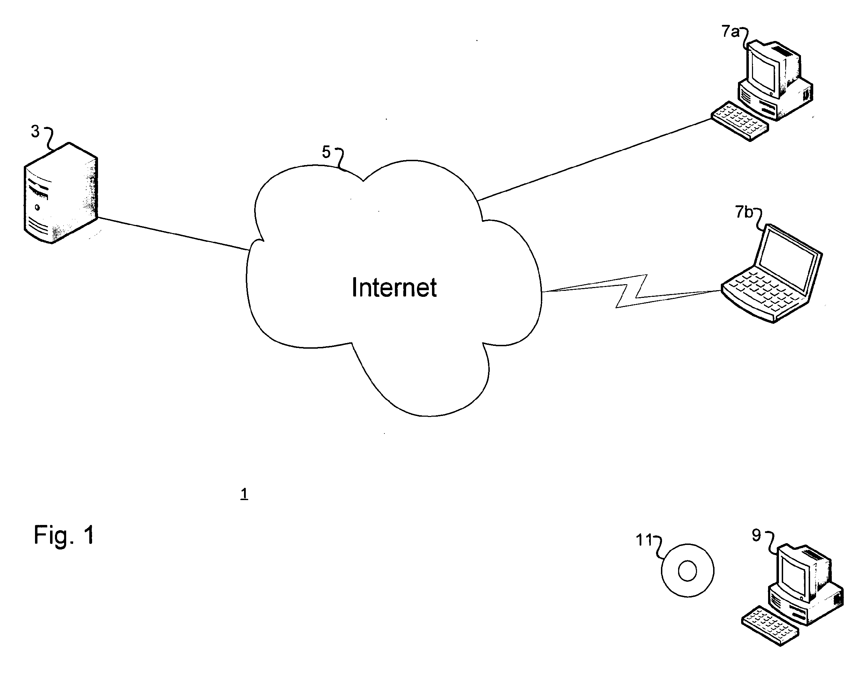

Figure 1 shows the components of a system 1 for generating a non-linear narrative according to a first embodiment of the present invention.

Figure 1 shows an authoring system 3 for allowing an author of the non-linear narrative to design and create a narrative. The authoring system 3 contains the rules, media elements input by the user as well as a narrative tree and pre-rendered media elements created by the processing of the authoring system as will be described in more detail below.

In this embodiment the authoring system is also a web server for distributing the completed non-linear narrative to viewers of the non-linear narrative located at viewing systems 7a and 7b connected to the web server via a network 5 such as the Internet.

The non-linear narrative can also be distributed to viewers at viewing systems 9 which are not connected to the web server 3 via a network 5 by storing the non-linear narrative tree and associated media elements on a storage medium such a DVD, hard drive or solid state memory 11.

### Physical Hardware

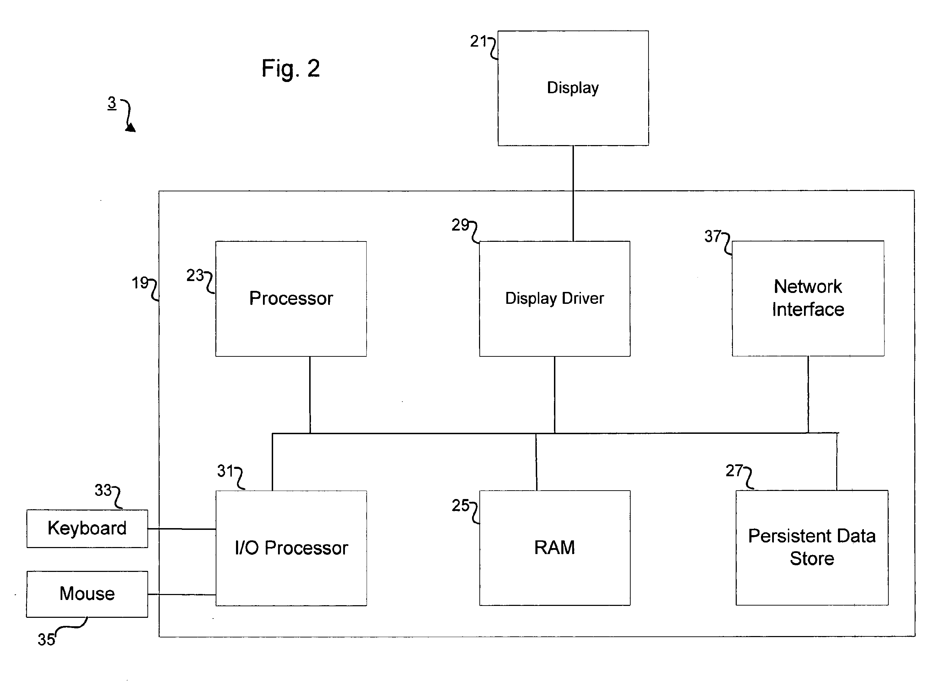

Figure 2 shows the hardware components of the authoring system 3 illustrated in Figure 1.

The authoring system 3 is formed of a processing unit 19 connected to a display 21. The processing unit 19 contains a processor 23 for executing program instructions stored in RAM 25. Persistent data store 27 contains media elements and data structures used in the generation of the non-linear narrative tree.

The processing unit 19 also contains a display driver 29 for driving a user interface on the display 21, an input/output unit 31 for receiving user input from a keyboard 33 and mouse 35 and a network interface 37 for connecting the authoring system 3 to the network 5. All of the internal components of the processing unit 19 are connected via an internal data bus 39.

### Functional components

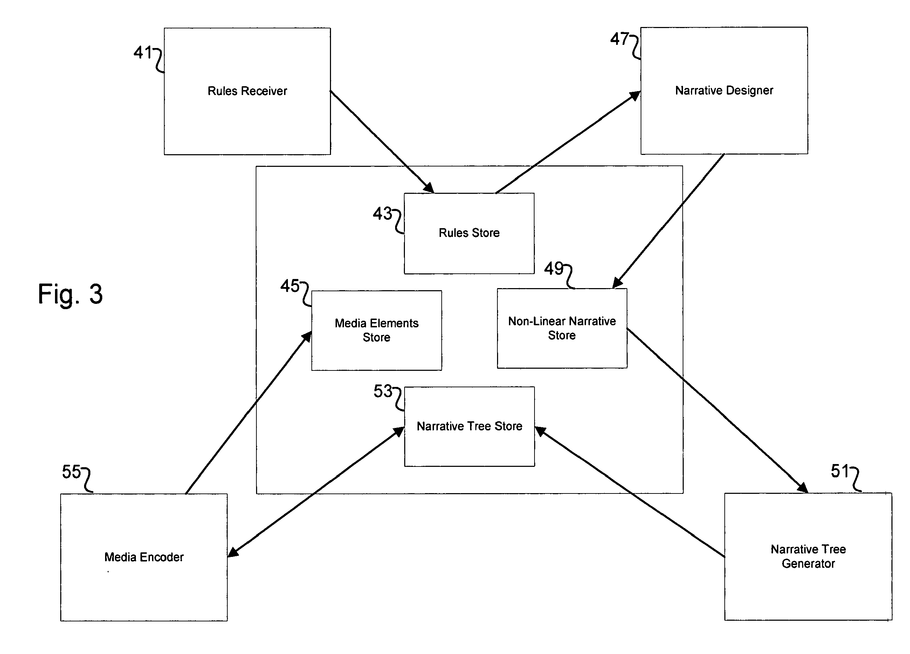

The program code to implement the authoring system 3 for generating the non-linear narrative tree is stored in RAM 27 and persistent data store 29. Figure 3 illustrates the functional components of the authoring system 3 as implemented by the processing unit 19 executing the program code stored in RAM 27 and persistent data store 29, and the functional storage locations on RAM 27 and persistent data store 29.

The authoring system has four functional processing components: a rules receiver 41 for receiving the rules which define the behaviour of parts of the non-linear narrative and their associated media elements; a narrative designer 47 for allowing the author to manipulate the rules in order to define the complete non-linear narrative; a narrative tree generator 51 for generating an optimised tree data structure representing the non-linear narrative and a media encoder 55 for encoding and combining media clips for presentation to the user.

Each functional processing component receives or retrieves data from a section of the persistent data store, processes that data and finally stores that data back into the persistent data store, normally in a different section. Accordingly, in addition to the program code to implement the functional processing components, the persistent data store contains separate storage sections for storing the data processed by the functional processing components. In this embodiment, the persistent data store contains a rules store 43, a non-linear narrative store 49, a narrative tree store 53 and a media elements store 45.

The rules store 43 receives input from the rules receiver and contains a set of rules that define the behaviour of parts of the non-linear narrative to be created and the associated media elements. In this embodiment, the rules are defined using the Synchronised Multimedia Integration Language (SMIL v 3.0). The rules store contains the input for the narrative designer 47.

The non-linear narrative store 49 contains the output of the narrative designer, namely a definition of the complete non-linear narrative. The non-linear narrative store contains the input for the narrative tree generator 51.

The narrative tree store 53 contains the output of the narrative tree generator 51, an optimised tree data structure.

The media elements store 45 contains the media elements after processing by the media encoder 55.

### Non-linear narrative article generation

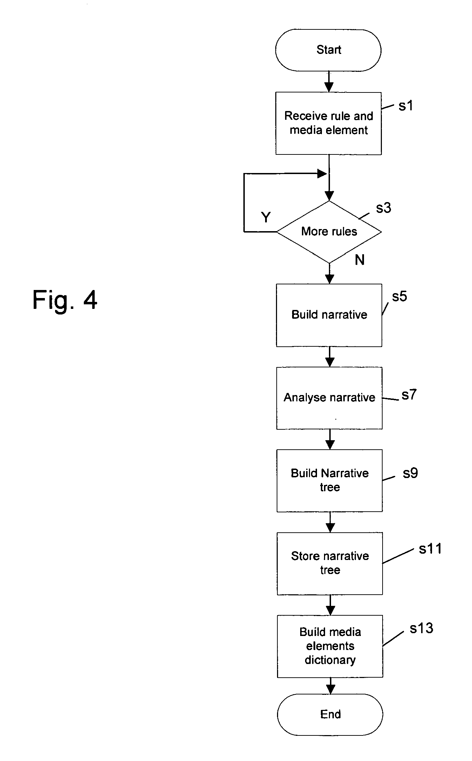

The interactions between the functional components in generating the optimised narrative tree data structure will be described with reference to the flowchart shown in Figure 4 using a simple set of rules.

In order to start creating a non-linear narrative, the author must specify a set of rules to determine the behaviour of the narrative. At step s1, the rules receiver 41 receives an author specified rule and media elements associated with that rule. The rule and media element(s) is/are stored in a rule store 43, which in this embodiment is located in the persistent data store 27.

In step s3, the rules receiver 41 checks to see if there are any more rules to be input. If there is at least one more rule available then processing returns to step s1 to add and store the new rule. When it is determined that there are no more rules to be input, then processing proceeds to step s5.

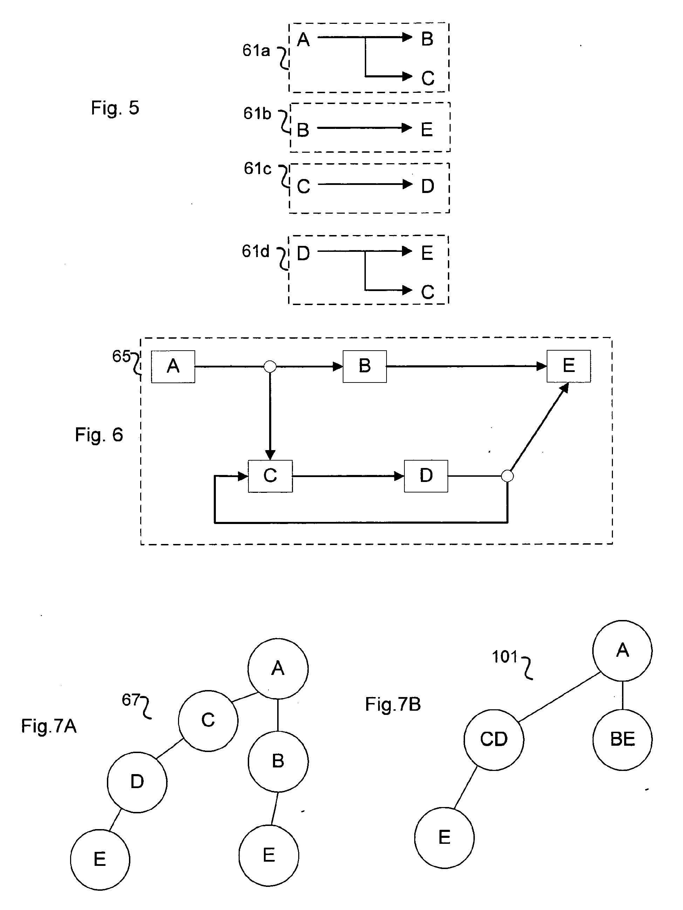

After it is determined that there are no more rules to be input, the rules store 43 contains a complete set of rules for describing the non-linear narrative and associated media elements. The content of the rule store 43 is shown in Figure 5.

As shown in Figure 5, the set of rules 61 a, 61 b, 61 c, 61 d within rules store 43 dictate the valid transitions between media elements. For ease of explanation, generation of a narrative tree using only a simple set of rules will be described. However, it will be clear to those skilled in the art that more complex sets of rules can be processed in the same manner. In this embodiment, each rule may be either a decision node, which specifies a branch in the narrative in dependence upon a viewer's choice, or a sequence node which specifies which media elements will be played after a previous media element.

For example, in the set of rules shown in Figure 5:
- Media element A can be followed by media element B or media element C;
- Media element B is followed by media element E;
- Media element C is followed by media element D; and
- Media element D can be followed by media element C or media element E.

In the final two rules, media element D follows media element C, but media element C can also follow D. This represents a loop and in for ease of explanation, in this embodiment, the loop only iterates once.

At step s5, the narrative designer 47 builds a narrative in accordance with the rules specified by the author and stored in the rules store 43. The narrative designer presents a graphical user interface to the author via the display driver 29 and display 21. The author can drag and drop rules and link them together to form the narrative. The author designed narrative is stored in non-linear narrative store 49, located in the persistent data store 29. Figure 6 shows a narrative data structure 65 resulting from the rules 61 stored in rules store 43.

In this embodiment, steps s1 to s5 representing the generation of the non-linear narrative are performed using known non-linear narrative generation tools and hence a detailed description is omitted. An example tool would be the NM2 Narrative Structure Language (NSL) designed by Goldsmiths University. The NSL language is implemented in Prolog and allows a user to generate rules as atomic narrative objects or structured narrative objects made of links, layers or groups.

At step s7 a narrative tree generator 51 analyses the non-linear narrative stored in non-linear narrative store 49 in order to aid in later processing.

At step s9, the narrative tree generator 51 builds a narrative tree 67 in accordance with the narrative stored in non-linear narrative store 49 and also with the results of the analysis performed in step s7 and stored in narrative tree store 53. The tree maps media elements as nodes, while branches are formed where a viewer can make a decision influencing the next media element to be viewed.

The narrative tree 67 starts with a root node representing the start of the non-linear narrative and represents all paths through the narrative such that there can be more than one terminating node in accordance with the narrative designed by the author.

Based on the analysis in step s7, the narrative tree generator 51 optimises the narrative tree 67 by identifying atomic sections of the tree which can be collapsed into a single sequence without branches. In addition, the narrative tree generator identifies duplicate sequences of nodes within the tree.

### Non-linear narrative tree optimisation

The process of analysing the narrative data structure in step s7 and the process of optimising the narrative tree in step s9 will now be described in more detail with reference to Figures 7A and 7B.

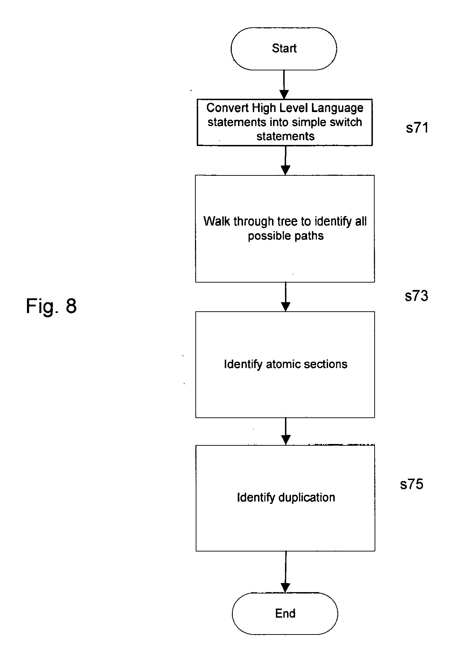

In order to begin optimisation of the narrative data structure, in step s7, the narrative tree generator 51 first analyses the narrative data structure 65. Figure 8 illustrates the processing of step s7 in more detail.

The non-linear narrative rules 61 are written using a high level language, in this case NSL, and therefore comprises a set of powerful, but computationally complex to process statements. This is particularly true for branch or computation decisions.

Therefore, in step s71, each of the high level language statements forming the non-linear narrative are converted into a set of relatively simple if/else if/else or C/C++ type switch statements.

After this processing step, the resultant set of simple statements completely describes the non-linear narrative article and can be processed by the narrative tree generator without excessive computational expense.

In step s73, the narrative tree generator 51 starts from the first statement forming the non-linear narrative data structure 65 and processes each statement in order. When a branch is encountered, the narrative tree generator 51 marks the branch point and then explores one of the branches, the branch and all sub branches are explored in their entirety before processing returns the first branch. The next path is then explored and the process continues iteratively until all of the possible paths in the narrative tree 67 have been processed as shown in Figure 7A.

The result of this first analysis is a tree structure 67 representing the non-linear narrative data structure 65 and in particular a tree structure of every possible path through the tree. The tree 67 is unoptimised at this stage.

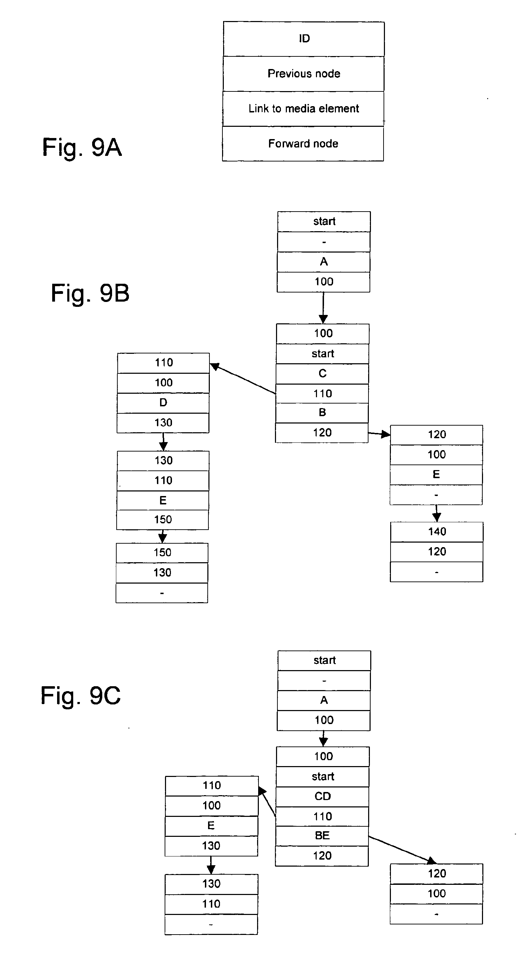

Of course, it will be clear to the skilled person that the narrative tree 67 is not actually stored as a tree representation in the narrative tree store 53. Instead the tree is represented as a linked list structure. As shown in figure 9A, each node data structure has an identifier, the identity of its upstream node, the identity of downstream nodes and the actual media clips which can be played following a decision. Figure 9B shows the node data structure hierarchy corresponding to the narrative tree shown in Figure 7A.

### Optimisations

Having determined all paths through the narrative tree 67, the narrative tree generator 51 analyses each section of the un-optimised narrative tree 67 to determine where optimisation can be performed.

In particular, the narrative tree generator 51 looks for:
1) Non-branching sections of the narrative tree which can be collapsed into atomic sections (step s75); and
2) multiple instances of nodes in the tree (step s77).

### Atomic sections

In this first optimisation process, the narrative tree generator 51 determines whether there are contiguous sections within the narrative which can be combined and treated as single atomic units.

The narrative tree generator 51 looks for nodes in the tree 67 which do not involve a decision point. For example, in the narrative shown in Figure 6, the nodes B and E are atomic because no decision needs to be taken to make a transition from node B to node E. Similarly, the nodes corresponding to C and D can be collapsed into a single node of the tree. Figure 8B shows the data structure of the narrative tree 67 after the processing of step s75.

### Pointers

Once identification of the atomic sections of the narrative tree 67 has been completed, the second stage is to eliminate duplication of the tree. In particular, the narrative tree generator walks through the tree again, identifying the different atomic media elements contained in the tree. On a second pass, for each unique atomic media element, the nodes containing that media element are identified. The most upstream of those nodes (in this embodiment the one with the lowest identifier number) retains its identity and all subsequent downstream nodes in the narrative tree are modified to point to the location of the media element of the first identified node having duplicates.

In the simple example of the first embodiment the second optimisation does not apply and will therefore be described later in the second embodiment.

Figure 7B shows the results of the analysis and tree optimisations. Figure 9C shows the data structure of the nodes in the optimised narrative tree 101.

Returning to Figure 4, at step s11, the narrative tree generator 51 stores the optimised narrative tree 101 and the associated media elements in narrative tree store 53.

At step s13, the optimised narrative tree 101 is accessed by the media encoder 55 to create a dictionary 103 of media elements. The media encoder walks through the optimised narrative tree 101 from the root to all possible end branches and extracts every encountered media element out of the node and into the media elements store 45. To maintain the link between the rules and the associated media element, the media encoder replaces the media element in the optimised tree 101 with a pointer to the location of the media element in media elements store 45.

For sections of the narrative tree 101 which have been collapsed into atomic sections, the media encoder 55 takes the set of associated media elements and combines them into a single composite media element.

Furthermore, for duplicate sections of the narrative tree 101 as identified by the narrative tree generator 51, the media encoder 55 extracts the duplicate media elements from the narrative tree and replaces them with a pointer to the location to the first instance of that media element in the media elements store 45. In this way, the media element store 45 contains only a set of unique media elements which can be displayed at more than one time in the narrative tree 101.

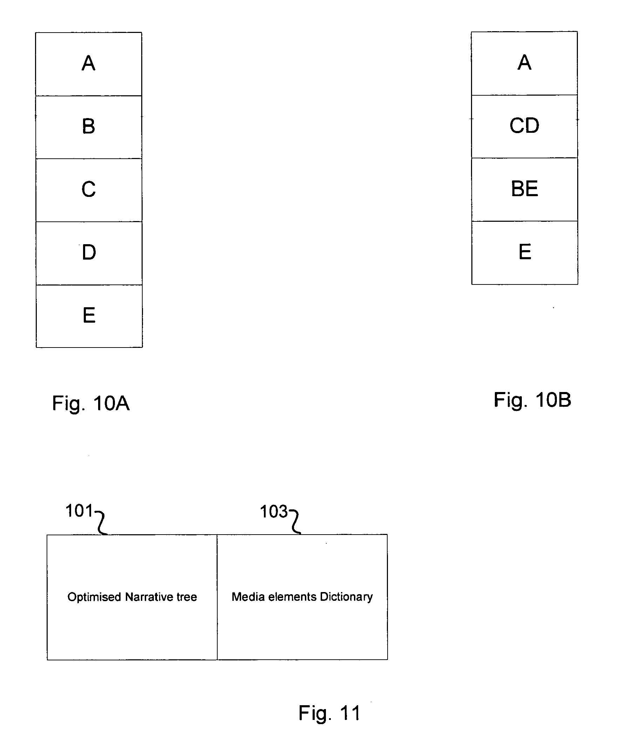

Figure 10A shows the contents of the media elements store if optimisation were not performed. In contrast, Figure 10B shows the media elements store after the processing of step s13. In particular, individual media elements A, B, C, D and E have been stored as atomic media elements A, CD, BE and E.

As shown in Figure 11, after the above processing steps, the author's non-linear narrative media article 99 is formed of an optimised narrative tree 101 representing all possible paths through the narrative and a dictionary 103 of associated media elements and atomic media element sections for display to the user.

### Distribution

The manner in which the generated non-linear narrative media article 99 is distributed to end users varies on the connection between the authoring system and each end user. Referring back to Figure 1, the authoring system is connected to end user computer 7a via a high speed data connection. Therefore to distribute the non-linear narrative media article, the authoring system 3 sends the entire narrative tree 101 and the complete dictionary 103 to the user before playback of the non-linear narrative article is initiated.

Viewer system 9 is not connected to the authoring computer 3 via a network such as the internet. Therefore the complete non-linear narrative article is sent in the form of a DVD 11.

Viewer system 7b is connected to the authoring system via a slow speed data connection. In this case, only the narrative tree is sent to the viewer system in advance of the program, and media elements from the library are sent to the viewer system on demand. This distribution method inhibits the user's viewing experience but places significantly less burden on the viewer system. In this case, as the user progresses along the narrative, a controller on the viewing system analyses the downstream sections of the tree and requests in advance, or pre-fetches, media elements so that the viewing experience in not deteriorated too significantly.

In another case, even the narrative tree is not sent to the viewing system and it is the web server's responsibility to monitor the user's progress along the narrative tree and send media elements to the viewer accordingly. This removes even more processing burden from the viewing system. The server includes a narrative renderer for accessing the narrative, monitoring the user choices to navigate the narrative and providing the appropriate media elements.

### Advantages

Generating non-linear narrative media articles as described above provides a number of advantages and improvements to the end user experience over known techniques.

The optimisations described above provide a separation of the control and data plane aspects of the non-linear narrative media article 99. Therefore changes to either the control or the media element data can be made independently. This is useful from a development perspective for example when revising the non-linear narrative media article or generating new but similar narrative.

Further processing the non-linear narratives by generation of the narrative tree 67 and subsequent optimisation provides a fixed cost for fetching pre-synthesized media items for each atomic part of the narrative. The media items don't need synthesis at each instance of execution but instead only need to be fetched from the dictionary 103. This is significantly faster than on demand synthesis.

Furthermore, a fixed start up cost in time and computation for media items means that pre-fetching can be taken into account for smoother delivery to the user.

Storing the media elements into a dictionary 103 allows use of pointers to atomic parts of the narrative 99 instead of containing the media elements as part of the tree 101. This results in a lighter narrative data format for the narrative which is advantageous where the narrative is distributed to multiple customers logged onto the narrative system.

There is less processing demand on the viewer systems. Only one process is required for the whole narrative traversal per client which is more efficient than known non-linear narratives.

### Second embodiment

In the first embodiment the narrative tree generator 51 creates a complete narrative tree 101 from the non-linear narrative data structure 65 provided by the author. By complete, every path within the narrative data structure 65 is processed from the root node through to the one or more final nodes.

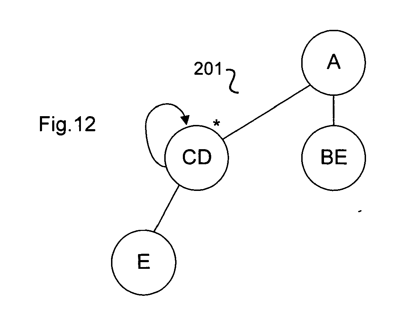

However, in the case of more complex narratives, in particular those involving complex loops, it is not possible to generate a complete narrative tree. For example, in the narrative structure shown in Figure 12 after the media element C and media element D (C and D would be grouped into a single atomic media element) the narrative can branch either to the terminal node E, or go back to C and D. This could be performed an infinite amount of times and therefore it is not efficient to calculate a tree modelling the entire set of possible paths.

In this case, the tree is marked as not being complete and whilst all paths which are complete are modelled and optimised, the sections which cannot be modelled are marked and require processing by a non-linear narrative renderer at run time. However, since the cause of incomplete trees is due to the presence of loops, the second optimisation performed by the narrative tree generator can still be used to minimise delays in providing the media clips. Since a loop will necessarily repeat a part of the narrative tree which has already been processed and optimised by the narrative tree generator, the atomic media items displayed by the non-linear narrative renderer at run-time are already stored in the dictionary and therefore the non-linear narrative renderer only needs to determine which atomic media clip is played at runtime. It does not need to composite different media clips each time, therefore the main advantages provided by the non-linear narrative renderer in the first embodiment are also present in the second embodiment.

### Third embodiment

In the first and second embodiments, the narrative tree generator 51 creates a dictionary 103 from the media items present in author's narrative data structure. The dictionary therefore contains a combination of audio and visual media elements.

In some cases, it is more efficient to separate the different media formats into distinct dictionaries or layers. In the third embodiment, the narrative tree generator is arranged to create a separate media layer.

The narrative tree generator of the third embodiment is arranged to determine whether the media clips provided by the author are purely audio data, purely video data or a combination of audio and visual data.

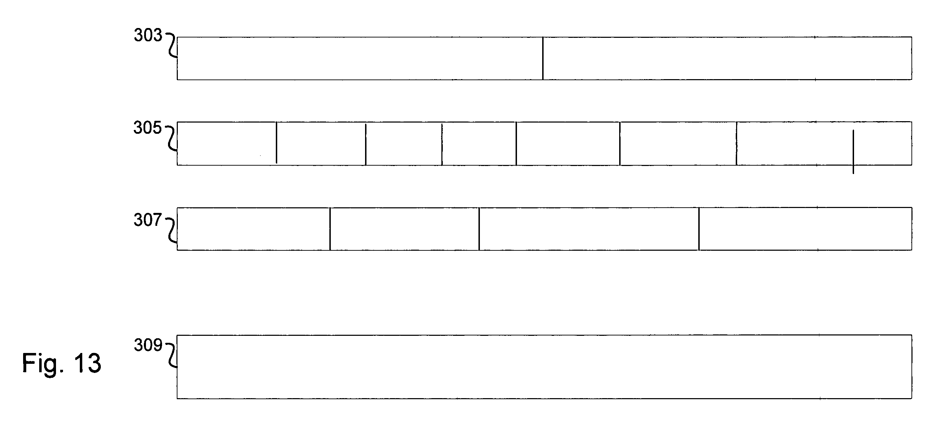

After generation and optimisation, as shown in figure 13, the narrative tree generator creates a complete non-linear narrative media article having separate audio only 303, video only 305 and combined audio visual 307 dictionaries and a controlling narrative layer 309 containing the optimised narrative tree are transferred to the viewer computers.

The narrative system of the third embodiment provides for more sophisticated narrative whereby decision nodes affect certain types of media clips but not others. This can lead to simpler a simpler overall dictionary structure with fewer clips populating the dictionaries. For example, in a case where the author of the narrative requires several video clips to play in various combinations with a single audio track, in the first embodiment, the author would need to specify many rules specifying the timing of each video clip and the appropriate start and end section of the audio track for the duration of the video. This leads to many resultant media clips being generated and stored in the dictionary to cover each possible combination of video and audio segment.

In the third embodiment, the author can specify rules for each media layer such that certain decision nodes only affect specific layers. Applying the third embodiment system to the above example, the narrative tree generator would only need to create a tree in which the first nodes specifies the first video media element and the audio media element, then subsequent decision nodes only affect the display of the different video media elements, the audio media element merely plays back regardless of the changes in the video media elements. This simplifies the dictionaries since the audio dictionary only contains a single audio track, and the video layer only contains the video media elements grouped in accordance with the optimisation processing described above.

Once a viewer computer has received the narrative layer and the dictionaries, a narrative renderer generates the non linear narrative article using the narrative layer containing the narrative tree and the appropriate media elements from each of the dictionaries.

As with the other embodiments, the web server is arranged to render the narrative article on behalf of a viewer machine and send only the parts of the various layers which are required for immediate viewing by the user. In this way the processing burden on the viewer machine is reduced while still providing the advantages of the narrative tree optimisations.

### Modifications and Alternatives

In a first embodiment, the authoring machine was also a web server for distributing the narrative article. In an alternative, the authoring machine and network server are different machines and the narrative article and pre-rendered media articles are transferred from the authoring server to the network server.

In the embodiments, the rules and non-linear narrative generated before optimisation into a narrative tree were designed using the NSL Narrative Structure Language (NSL). It will be appreciated that any narrative generation language tool could be used which is capable of defining a non-linear narrative. For example a language defined in C++.

In the embodiments, the generation of the non-linear narrative media article is the reception of rules defining the behaviour of parts of the narrative. However, in an alternative system, the authoring system is arranged to receive a pre-generated non-linear narrative definition file and generate an optimised narrative tree having the same advantages as the embodiments described above.

In the embodiments, the optimisation of the non-linear narrative data structure included a step of identifying sections of media clips which can be grouped into a single atomic structure. This has the benefit of enabling sections of the narrative tree which can be displayed to the user without an intermediary decision to be pre-rendered and stored as a single entry in the dictionary. In a modification to the optimisation described in the embodiments, the author can mark certain media clips as "not to group". This explicit marking ensures that the clips are not collapsed during optimisation. The reason for such a marking is to accommodate certain narrative articles where the media clips are liable to change at runtime, for example live news items or advertisements displayed during the narrative. In this case, although the tree can still be optimised, the corresponding entry in the media dictionary can only contain a link to the source of the dynamic media clip. In contrast to its normal processing, the narrative renderer must dynamically composite those particular media items which are not grouped and present it to the user. In order to reduce the time taken, statistical analysis or intelligent caching may be used to pre-fetch the dynamic media clip when the non-linear narrative article is first displayed to the user.

## Claims

1. A method of delivering a non-linear narrative media article from a narrative server to a viewer client device, the method comprising:
transmitting a plurality of media layers, each media layer representing a different media type forming a part of the non-linear narrative media article;
transmitting a narrative layer specifying the non-linear narrative media article including synchronisation points between the plurality of media layers; and
rendering the non-linear narrative in accordance with the narrative layer information and media layers.

2. A method according to claim 1, wherein the narrative layer is a tree data structure having nodes representing branch decisions in the narrative and branches representing media elements and wherein each media layer contains a dictionary of the media elements.

3. A method according to claim 1 or claim 2, wherein the media layers are one of audio, video or audio-visual media elements.

4. A method according to any preceding claim, wherein the complete narrative layer is sent to the client and each media layer is only partially sent before rendering of the non-linear narrative is initiated.
